# EUROPÄISCHE PATENTANMELDUNG

(11) **EP 4 651 386 A1**
(43) Veröffentlichungstag der Anmeldung: **19.11.2025**
(21) Anmeldenummer: 25172338.3
(22) Anmeldetag: 24.04.2025
(51) Int. Cl.: H04B 1/00, H04B 1/16, H04B 1/401, H04W 52/02

(54) **FUNKEMPFÄNGER**

(30) Priorität: 14.05.2024 DE 102024113501; 19.07.2024 DE 102024120679
(71) Anmelder: Diehl Metering Systems GmbH, 90451 Nürnberg (DE)
(72) Erfinder: Petkov, Hristo, 90411 Nürnberg (DE); Weiss, Karolin, 90459 Nürnberg (DE); Kauppert, Thomas, 90455 Nürnberg (DE)
(74) Vertreter: Diehl Patentabteilung

(57) **Zusammenfassung**

Funkempfänger (100) eines Datensammlers oder Gateways, des SDR-Typs für den Einsatz in einer energieautarken, vorzugsweise in einer langzeitenergieautarken Umgebung, wobei der Funkempfänger (100) Daten (102) in Form von Datenpaketen (300) oder Teildatenpaketen (300a) empfängt und zur Datenweiterverarbeitung bereitstellt und wobei der Funkempfänger (100) folgendes umfasst:
eine autarke Energiequelle in Form einer Batterie (105), vorzugsweise eine Longlife Batterie und/oder einer Photovoltaikzellen-Anordnung (119),
einen Funk-Empfangspfad (102), in dem zu den Datenpaketen (300) oder Teildatenpaketen (300a) korrespondierende analoge Funksignale empfangen, in I/Q Daten (108) umgewandelt und für eine nachfolgende Bearbeitung bereitgestellt werden,
einen dem Funk-Empfangspfad (102) nachgeschalteten ersten Microcontroller (101), der die vom Funk-Empfangspfad (102) bereitgestellten I/Q Daten (108) zu vorverarbeiteten I/Q Daten (113) verarbeitet,
einen dem ersten Microcontroller (101) nachgeschalteten zweiten Microcontroller (110), der die vorverarbeiteten I/Q Daten (113) weiterverarbeitet.

## Beschreibung

Die vorliegende Erfindung betrifft einen Funkempfänger eines Datensammlers oder Gateways gemäß Anspruch 1. Die folgende Erfindung betrifft insbesondere einen entsprechenden Funkempfänger des Software Defined Radio (SDR)-Typs. Ein solcher Funkempfänger führt eine auf Software-Berechnungen per Algorithmen beruhende Signalverarbeitung der empfangenen Funksignale durch. Diese Berechnungen erfolgen mittels eines im Funkempfänger vorgesehenen Microcontrollers. Der Microcontroller wird von einer im Funkempfänger vorgesehenen autarken Energiequelle mit elektrischer Energie versorgt. Der Funkempfänger ist dazu vorgesehen, in einer langzeitenergieautarken Umgebung Daten in Form von Datenpaketen oder Teildatenpaketen von Netzwerkknoten, vorzugweise Verbrauchsmessgeräten, zu empfangen und zur Datenweiterverarbeitung bereitzustellen. Von dem Funkempfänger können die bereitgestellten Daten weiter an eine Zentrale bzw. an ein Headend übertragen werden.

### Druckschriftlicher Stand der Technik

Die WO 2019/166260 A1 betrifft einen Funkempfänger für ein batteriebetriebenes stationäres Endgerät, wie z. B. ein Verbrauchsmessgerät, mit einer Empfangseinrichtung zum Empfang von Daten (z. B. Firmware-Update-Daten für das Endgerät) eines Datensammlers, aus der Daten abgezweigt und einem Microcontroller mit einer festlegbaren Samplingrate zugeführt werden. Der Microcontroller zwischenspeichert die Daten und hält sie für eine Weiterverarbeitung bereit. Dieser Stand der Technik betrifft ein Endgerät. Die Schrift enthält keine Informationen über die Ausgestaltung des mit dem Endgerät kommunizierenden Datensammlers.

### Aufgabe der vorliegenden Erfindung

Die Aufgabe der vorliegenden Erfindung besteht darin, einen gattungsgemäßen Funkempfänger zur Verfügung zu stellen, der einerseits einen reduzierten Energieverbrauch gewährleistet, andererseits hinsichtlich seiner Fähigkeiten in Bezug auf seine Rechenleistung optimiert ist.

### Lösung der Aufgabe

Die vorstehende Aufgabe wird durch einen Funkempfänger gemäß den Merkmalen des Anspruchs 1 gelöst. Zweckmäßige Ausgestaltungen des erfindungsgemäßen Funkempfängers sind in den abhängigen Ansprüchen beansprucht.

Erfindungsgemäß wird die Verarbeitung der von dem Funk-Empfangspfad erzeugten und bereitgestellten I/Q Daten auf einen ersten und einen zweiten Microcontroller aufgeteilt. Daraus resultiert der Vorteil, dass die Bearbeitung der I/Q Daten energieeffizienter durchgeführt werden kann als bisher. Denn die Aufteilung erlaubt es, den zweiten Microcontroller beispielsweise nur dann einzusetzen, wenn er gebraucht wird. Ansonsten kann er sich in einem energiesparenden Ruhemodus befinden. Darüber hinaus kann er leistungsfähiger konzipiert sein als der erste Microcontroller, so dass nichtsdestotrotz eine besonders leistungsfähige Bearbeitung der I/Q Daten im Funkempfänger erfolgen kann.

Gemäß einer vorteilhaften Ausgestaltung der Erfindung kann die maximale Stromaufnahmefähigkeit des zweiten Microcontrollers größer sein als die maximale Stromaufnahmefähigkeit des ersten Microcontrollers. Hierdurch wird die Möglichkeit geschaffen, mit dem zweiten Microcontroller höhere Rechenleistungen durchzuführen als bisher und damit die Empfangseigenschaften zu verbessern, ohne hierbei den Energieverbrauch zu verschlechtern. Beispielsweise kann der erste Microcontroller permanent oder zumindest häufiger aktiv sein als der zweite Microcontroller. Hierdurch kann der Energieverbrauch des Funkempfängers des energieautark betriebenen Funkempfängers einerseits reduziert werden, andererseits bleibt er dennoch in der Lage, bei Bedarf höhere Rechenleistungen über den zweiten Microcontroller zu generieren. Außerdem besteht hierdurch die Möglichkeit, die Empfangsalgorithmen auf den ersten und zweiten Microcontroller aufzuteilen. Insbesondere kann z. B. die Erfassung oder Detektion oder Suche der Bursts bzw. Datenpakete auf Basis der bereitgestellten I/Q Daten durch den ersten Microcontroller erfolgen. Dies kann über einen längeren Zeitraum notwendig sein. Hierbei kann der erste Microcontroller permanent aktiv sein. Danach können die durch den ersten Microcontroller vorverarbeiteten I/Q Daten mithilfe weiterer Algorithmen im zweiten Microcontroller weiter verarbeitet werden. Auf Letzterem können Sie mit weiteren Algorithmen weiterverarbeitet werden. Auch besteht die Möglichkeit, bestimmte Tätigkeiten, z. B. Detektion und/oder Zeit und/oder Frequenzsynchronisation, vom ersten Microcontroller mit einer geringeren Genauigkeit durchzuführen. Bei Bedarf können die betreffenden Tätigkeiten von dem zweiten Microcontroller nachfolgend mit einer höheren Genauigkeit wiederholt werden. Der Funkempfänger wird somit einerseits hinsichtlich seines Energieverbrauchs, andererseits hinsichtlich seiner Leistungsfähigkeit und Variabilität seines Einsatzes optimiert.

Gemäß einer vorteilhaften Ausgestaltung der Erfindung können die für eine Verarbeitung durch den ersten Microcontroller bereitgestellten I/Q Daten im Funk-Empfangspfad aus einem I/Q Datenstrom abgezweigt und dem ersten Microcontroller zugeführt werden.

Gemäß einer vorteilhaften Ausgestaltung der Erfindung können die im ersten Microcontroller vorverarbeiteten I/Q Daten in einem Speicher zwischengespeichert werden. Die in dem Speicher zwischengespeicherten I/Q Daten können je nach Bedarf durch den zweiten Microcontroller weiterbearbeitet werden. Der Speicher kann entweder Teil des ersten Microcontrollers oder zweiten Microcontrollers sein. Alternativ kann der Speicher auch als zusätzlicher Speicher oder Speicherbaustein vorgesehen sein.

Gemäß einer vorteilhaften Ausgestaltung der Erfindung können der Funk-Empfangspfad, der erste Microcontroller sowie vorzugsweise der Speicher auf einem gemeinsamen Chip, vorzugsweise auf einem sogenannten System on (SoC) Chip integriert sein. Derartige Chips stehen als günstige Ware als Standard-Chips bzw. als Massenware für unterschiedlichste Einsatzzwecke zur Verfügung und können daher auch für einen erfindungsgemäßen Funkempfänger im Rahmen der vorliegenden Idee verwendet werden.

Gemäß einer vorteilhaften Ausgestaltung der vorliegenden Erfindung kann der zweite Microcontroller auf einem eigenen Chip integriert, also physisch vom ersten Microcontroller getrennt, sein. Der den Funk-Empfangspfad sowie den ersten Microcontroller umfassende Standard-Chip sowie der den zweiten Microcontroller aufweisende weitere Chip können somit getrennt auf z. B. einer Leiterplatte angeordnet sein.

Gemäß einer vorteilhaften Ausgestaltung der vorliegenden Erfindung kann der erste Microcontroller und der zweite Microcontroller über ein Interface, vorzugsweise ein serielles Interface, besonders vorzugsweise über ein Serial Peripheral Interface (SPI), miteinander elektrisch verbunden sein.

Gemäß einer vorteilhaften Ausgestaltung der vorliegenden Erfindung kann der zweite Microcontroller eine Mehrzahl von Einzel-Microcontrollern umfassen oder aus diesen bestehen. Der zweite Microcontroller kann somit auch aus einer Anordnung von Einzel- Microcontrollern auf einem gemeinsamen Chip oder alternativ in Form einzelner Chips ausgestaltet sein. Dies ermöglicht eine individualisierte Architektur bei einem reduzierten Stromverbrauch.

Gemäß einer vorteilhaften Ausgestaltung der vorliegenden Erfindung kann während des Betriebs des Funkempfängers der erste Microcontroller pro Zeiteinheit, z. B. pro Tag, in einer ersten Häufigkeit in einem aktiven Zustand und der zweite Microcontroller in einer zweiten Häufigkeit in einem aktiven Zustand sein, wobei die zweite Häufigkeit größer ist als die erste Häufigkeit. Hierdurch kann der zweite Microcontroller z. B. häufiger für eine kürzere Zeit aktiv sein, wodurch eine wirksame Energieeinsparung bei gleichzeitiger Möglichkeit einer erhöhten Rechenleistung erzielt werden.

Gemäß einer weiteren vorteilhaften Ausgestaltung der vorliegenden Erfindung kann während des Betriebs des Funkempfängers der erste Microcontroller pro Zeiteinheit, z. B. Pro Tag, in einer ersten Gesamtzeitdauer in einem aktiven Zustand und der zweite Microcontroller in einer zweiten Gesamtzeitdauer in einem aktiven Zustand sein, wobei die erste Gesamtzeitdauer größer ist als die zweite Gesamtzeitdauer. Auch hierdurch kann der zweite Microcontroller z. B. häufiger für eine kürzere Zeit aktiv sein, wodurch eine wirksame Energieeinsparung bei gleichzeitiger Möglichkeit einer erhöhten Rechenleistung erzielt werden.

Gemäß einer vorteilhaften Ausgestaltung der vorliegenden Erfindung kann der zweite Microcontroller vom ersten Microcontroller von einem Schlaf Modus in einen aktiven Modus aufgeweckt werden. Insbesondere kann der erste Microcontroller den zweiten Microcontroller hinsichtlich seines Betriebs anstoßen.

Gemäß einer vorteilhaften Ausgestaltung der vorliegenden Erfindung kann der zweite Microcontroller nur dann betrieben werden, wenn eine über den ersten Microcontroller hinausgehende Rechenleistung benötigt wird. Insbesondere kann der zweite Microcontroller sich entweder in einem Schlaf Modus mit laufender Echtzeituhr, bei dem weitestgehend alle Komponenten inaktiv sind, befinden, oder in einem tiefsten Schlaf Modus, bei dem auch die laufende Echtzeituhr abgeschaltet ist, befinden. Vom ersten Microcontroller kann er dann entweder aus dem Schlaf Modus oder aus dem tiefsten Schlaf Modus geweckt werden, sofern dies nötig ist.

Gemäß einer vorteilhaften Ausgestaltung der vorliegenden Erfindung kann der Schlaf Modus oder der tiefste Schlaf Modus beim zweiten Microcontroller im Vergleich zum ersten Microcontroller häufiger vorkommen.

Gemäß einer vorteilhaften Ausgestaltung der vorliegenden Erfindung können vom ersten Microcontroller folgende Tätigkeiten geleistet werden:
Filterung und/oder
Datendezimierung und/oder
Down-Sampling und/oder
Detektion und/oder
Auswahl der Datenpakete aus dem I/Q-Datenstrom Datenstrom der vorverarbeiteten I/Q Daten und/oder
Zeit und/oder Frequenzsynchronisation und/oder
Dekodieren.

Vorzugsweise werden die Tätigkeiten Filterung und Detektion in jedem Fall vom ersten Microcontroller durchgeführt.

Gemäß einer vorteilhaften Ausgestaltung der vorliegenden Erfindung können vom zweiten Microcontroller folgende Tätigkeiten geleistet werden:
Filterung und/oder
Datendezimierung und/oder
Down-Sampling und/oder
Detektion und/oder
Auswahl der Datenpakete aus dem I/Q-Datenstrom der vorverarbeiteten I/Q Daten und/oder
Zeit und/oder Frequenzsynchronisation und/oder
Dekodieren.

Gemäß einer vorteilhaften Ausgestaltung der vorliegenden Erfindung kann mindestens eine der vorgenannten Tätigkeiten von dem ersten Microcontroller mit einer geringeren Genauigkeit bei reduziertem Stromverbrauch durchgeführt werden und vom zweiten Microcontroller mit einer höheren Genauigkeit wiederholt oder nachjustiert werden. Dies ist insbesondere bei der Detektion und/oder Zeit und/oder Frequenzsynchronisation von Daten vorteilhaft.

Gemäß einer vorteilhaften Ausgestaltung der vorliegenden Erfindung kann eine, vorzugsweise in ihrer Lage variierbare, Bearbeitungstrennebene der Zuordnung der Tätigkeit des ersten Microcontrollers und der Tätigkeit des zweiten Microcontrollers in der Abfolge der Bearbeitungsschritte nach dem Eingang eines Funksignals festgelegt sein.

Gemäß einer zweckmäßigen Ausgestaltung der vorliegenden Erfindung kann die Lage der Bearbeitungstrennlinie zwischen der Tätigkeit des ersten Microcontrollers und der Tätigkeit des zweiten Microcontrollers vom ersten Microcontroller auch aktiv gesteuert werden. Dies bedeutet, dass der erste Microcontroller entscheiden kann, welche Tätigkeiten vom ersten Microcontroller und vom zweiten Microcontroller durchgeführt werden sollen.

Gemäß einer zweckmäßigen Ausgestaltung der vorliegenden Erfindung kann im Betrieb das für eine bestimmte Restlaufzeit vorhandene Energiebudget bei der Steuerung des Funkempfängers in Bezug auf den Betrieb des ersten Microcontrollers und/oder zweiten Microcontrollers miteinbezogen werden. Steht beispielsweise mehr Energie zur Verfügung, kann der zweite Microcontroller öfter und/oder über längere Betriebszeiten eingesetzt werden.

Gemäß einer zweckmäßigen Ausgestaltung der vorliegenden Erfindung kann die Zeit- und/oder Frequenzsynchronisation des ersten Microcontrollers in dem zweiten Microcontroller nachjustiert werden.

Gemäß einer zweckmäßigen Ausgestaltung der vorliegenden Erfindung erfolgt die Versendung der vom Funkempfänger zu empfangenen Daten in den sog. ISM-Bändern, vorzugsweise in dem 868 MHz-Frequenzband.

Gemäß einer zweckmäßigen Ausgestaltung der vorliegenden Erfindung kann die maximale Taktfrequenz des ersten Microcontrollers und/oder zweiten Microcontrollers kleiner als 150 MHz sein. Vorzugsweise kann die maximale Taktfrequenz des zweiten Microcontrollers kleiner als 150 MHz und/oder die maximale Taktfrequenz des ersten Microcontrollers kleiner oder gleich 80 MHz sein.

Gemäß einer zweckmäßigen Ausgestaltung der vorliegenden Erfindung kann der erste Microcontroller und/oder zweite Microcontroller bei einer Spannung von 1,8 V einen Strom von weniger als 34 mA ziehen. Vorzugsweise kann der erste Microcontroller bei einer Spannung von 1,8 V einen Strom von weniger als 10 mA, vorzugsweise von weniger als 5 mA, ziehen und/oder es kann der zweite Microcontroller bei einer Spannung von 1,8 V einen Strom von weniger als 34 mA ziehen.

### Beschreibung der Erfindung anhand von Ausführungsbeispielen

Zweckmäßige Ausgestaltungen der vorliegenden Erfindung werden anhand von Ausführungsbeispielen nachstehend näher erläutert. Gleichbleibende Merkmale werden der Übersichtlichkeit halber lediglich einmal in den Figuren mit Bezugszeichen gekennzeichnet. Es zeigen:
- Fig. 1: eine stark vereinfachte schematische Darstellung eines Kommunikationssystems mit einem Funkempfänger gemäß einem Beispiel der vorliegenden Erfindung sowie mehreren Endgeräten, die Telegramme an den Funkempfänger übermitteln, die von letzterem empfangen werden;
- Fig. 2: eine stark vereinfachte schematische Darstellung eines Telegramms (Datenpaket), welches z. B. in Form mehrerer Teil-Datenpakete von einem Endgerät versendet und von dem Funkempfänger empfangen wird;
- Fig. 3: eine stark vereinfachte schematische Darstellung eines Beispiels eines Funkempfängers gemäß der vorliegenden Erfindung mit einer Batterie als autarke Energiequelle;
- Fig. 4: eine stark vereinfachte schematische Darstellung eines Beispiels eines Funkempfängers gemäß der vorliegenden Erfindung mit einer Photovoltaikzellen-Anordnung als autarke Energiequelle;
- Fig. 5: eine stark vereinfachte schematische Darstellung der Festlegung der Bearbeitungsschritte durch den ersten Microcontroller sowie durch den zweiten Microcontroller des Funkempfängers gemäß Fig. 3 bei einer festlegbaren Bearbeitungstrennebene; sowie
- Fig. 6: eine stark vereinfachte schematische Darstellung einer Ausgestaltung, bei der I/Q Daten aus einem I/Q Datenstrom abgezweigt werden.

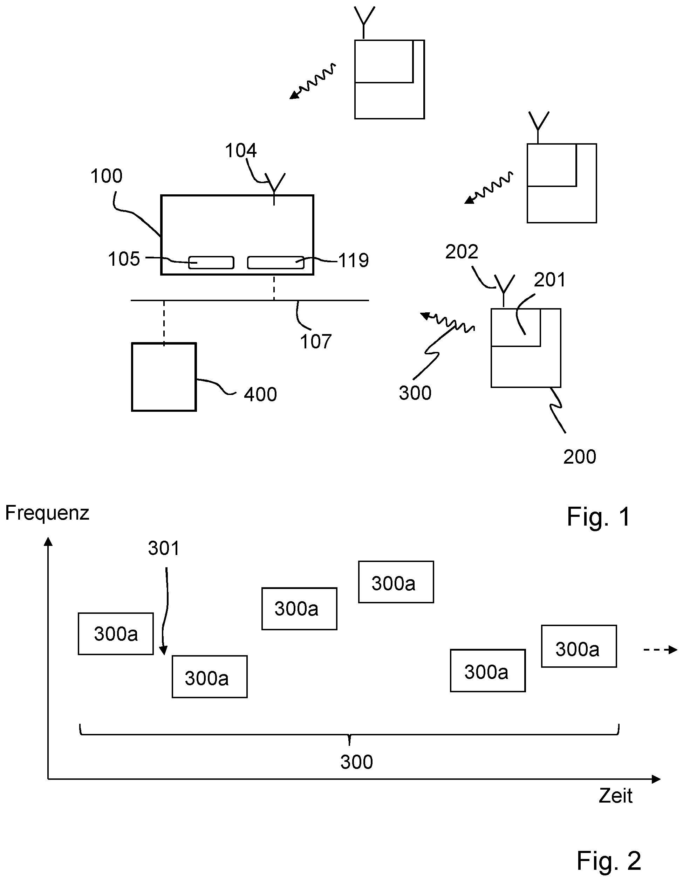

Fig. 1 zeigt ein Funk-Kommunikationssystem, bei welchem mehrere an unterschiedlichen Orten positionierte Funkknoten 200 bzw. Endgeräte, z. B. Verbrauchsmessgeräte, mit einem Funkempfänger 100 in Form eines Gateways oder Datensammlers kommunizieren. Bei dem Funkempfänger 100 handelt es sich um einen Funkempfänger des SDR (Software Defined Radio)-Typs, welcher zum Betrieb in einer energieautarken Umgebung vorgesehen ist. Ein solcher Funkempfänger führt eine auf Software-Berechnungen per Algorithmen beruhende Signalverarbeitung der empfangenen Funksignale durch. Diese Berechnungen erfolgen mittels eines im Funkempfänger vorgesehenen Microcontrollers. Der Microcontroller wird von einer im Funkempfänger vorgesehenen autarken Energiequelle mit elektrischer Energie versorgt.

Der Funkempfänger 100 weist einen Funk-Empfangseinrichtung mit einer Antenne 104 auf. Der Funkempfänger 100 wird von einer Batterie 105, vorzugsweise einer sogenannten Longlife Batterie, mit Energie versorgt. Eine solche Batterie 105 versorgt den Funkempfänger 100 über einen Zeitraum von z. B. mindestens fünf Jahren, vorzugsweise z. B. mindestens zehn Jahren, ohne dass ein Austausch der Batterie 105 erfolgen muss. Der Funkempfänger 100 besitzt ein Energieverbrauchsbudget, welches sicherstellt, dass der Funkempfänger 100 z. B. mindestens über einen Zeitraum von fünf Jahren, vorzugsweise mindestens zehn Jahren, in Betrieb ist, ohne dass ein Austausch der Batterie 105 erfolgen muss.

Alternativ zu der Batterie 105 oder zusätzlich zu der Batterie 105 kann der Funkempfänger 100 über eine Photovoltaikzellen-Anordnung 119 verfügen. Die Photovoltaikzellen-Anordnung 119 dient dazu, den photovoltaisch erzeugten elektrischen Strom für den Betrieb des Funkempfängers 100 zu nutzen. Ist die Photovoltaikzellen-Anordnung 119 zusätzlich zu der Batterie 105 vorgesehen, kann dadurch die Batterie 105 entlastet werden.

Mit der Photovoltaikzellen-Anordnung 119 wird elektrische Energie erzeugt, wenn in der Photovoltaikzellen-Anordnung 119 das einfallende Sonnenlicht in eine elektrische Spannung umgewandelt wird. Bei Bedarf kann auch ein (in den Zeichnungen nicht dargestellter) Energiepuffer in Kombination mit der Photovoltaikzellen-Anordnung 119 zum Einsatz kommen.

Bezüglich der Batterie 105 ist eine (in den Zeichnungsfiguren nicht dargestellte) Einrichtung zur Überwachung der Kapazität bzw. des aktuellen Ladezustands der Batterie 105 vorgesehen. Diese ermöglicht es, permanent das verbleibende Energieverbrauchsbudget für die Restlaufzeit der Batterie zu bestimmen.

Die von dem Funkempfänger zu empfangenden Telegramme sind mit der Bezugsziffer 300 gekennzeichnet. Diese können von den jeweiligen Knoten 200 beispielsweise zu bestimmten Zeitpunkten versendet werden. Beispielsweise werden die Telegramme 300 jeden Tag zwischen 11:55 Uhr und 12:05 Uhr von den einzelnen Knoten 200 versendet. Hierzu öffnet der Funkempfänger 100 für den Empfang der Telegramme 300 zu dieser Zeit ein Empfangsfenster, bei dem der Funkempfänger von einem Schlaf Modus in einen aktiven Modus wechselt und nach Telegrammen 300 sucht. Alternativ können hinsichtlich der einzelnen Knoten 200 auch unterschiedliche Sendezeitpunkte festgelegt sein.

Die von dem Funkempfänger 100 empfangenen Telegramme 300 werden in dem Funkempfänger 100 verarbeitet und anschließend über ein Netzwerk 107 beispielsweise an ein Headend 400 übertragen. Die Übertragung der Daten von dem Funkempfänger 100 über das Netzwerk 107 kann auf unterschiedliche Art und Weise erfolgen. Beispielsweise kann hierzu eine Funkübertragungsstrecke zu einem weiteren fixen oder mobilen Empfangspunkt vorgesehen sein.

Die Versendung der vom Funkempfänger 100 empfangenen Telegramme 300 erfolgt vorzugsweise, was die Frequenz anbelangt, in den sog. ISM-Bändern, vorzugsweise in dem 868 MHz-Frequenzband.

Fig. 2 zeigt eine mögliche Übertragung eines Telegramms 300 in Form einzelner jeweils von einer Pause 301 getrennter Teildatenpakete 300a. Diese können beispielsweise nach ihrer Erzeugung im Sender (Funkknoten 200) als Bursts vorzugsweise über verschiedene Frequenzbänder übertragen werden. Aus den vom Funkempfänger 100 empfangenen Teildatenpaketen 300a kann die Information des Telegramms 300 extrahiert werden.

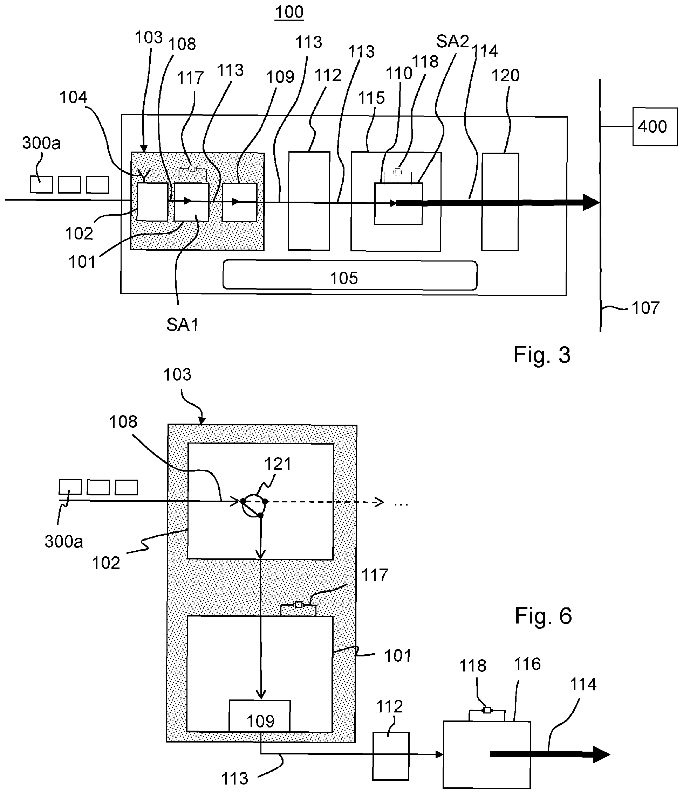

Fig. 3 zeigt die wesentlichen Komponenten eines Beispiels eines erfindungsgemäßen Funkempfängers 100. Der Funkempfänger 100 umfasst einen Chip 103 als Frontend des Funkempfängers 100. Bei dem Chip 103 handelt es sich vorzugsweise um einen sogenannten SoC ("System on a Chip") mit einem integrierten Empfangspfad 102 mit Antenne 104, der einen (jeweils in der Zeichnung nicht dargestellten) Empfangspfad-Microcontroller sowie Analog/Digital-Umsetzer zum Empfang der Bursts der Telegramme 300 bzw. der Teildatenpakete 300a und Umwandlung in einen Strom von I/Q Daten 108 umfasst, die zur Weiterverarbeitung für einen nachgeschalteten ersten Microcontroller 100 bereitgestellt werden.

Der erste Microcontroller 101 sowie der Funk-Empfangspfad 102 einschließlich Antenne 104 können physischer Bestandteil des Chips 103 sein. Der erste Microcontroller 101 besitzt eine erste Zeitreferenzeinheit 117 (erster Oszillator). Der erste Microcontroller 101 erlaubt es, die vom Empfangspfad bereitgestellten I/Q Daten 108 zu verarbeiten. Die vom ersten Microcontroller vorverarbeiteten I/Q Daten 113 können in einem Speicher 109 gespeichert und für eine weitere Verarbeitung bereitgestellt werden.

Die vom ersten Microcontroller 101 vorverarbeiteten I/Q Daten 113 werden einem zweiten Microcontroller 110, der vom ersten Microcontroller 101 physisch getrennt ist, über eine Schnittstelle 112 zugeführt. Bei der Schnittstelle 112 kann es sich vorzugsweise um ein serielles Interface, besonders vorzugsweise um ein Serial Peripheral Interface (SPI) handeln.

Der zweite Microcontroller 110 kann eine maximale Stromaufnahmefähigkeit SA2 besitzen, welche größer ist als die maximale Stromaufnahmefähigkeit SA1 des ersten Microcontrollers 101. "Maximale Stromaufnahmefähigkeit" bedeutet die Stromaufnahme des jeweiligen Microcontrollers 101, 110, bei der weitestgehend alle Komponenten des jeweiligen Microcontrollers 101, 110 aktiv sind.

Aufgrund der größeren maximalen Stromaufnahmefähigkeit SA2 kann vom zweiten Microcontroller 110 eine höhere Rechenleistung im Vergleich zum ersten Microcontroller 101 erzielt werden, z. B. dann, wenn es erforderlich ist, aufwendigere Algorithmen zu berechnen. Ferner können Rechenleistungen in dem Empfänger 100 mit erhöhter Leistungsfähigkeit nur dann durchgeführt werden, wenn sie tatsächlich gebraucht werden. Ansonsten kann sich der zweite Microcontroller 110 in einem Schlaf Modus oder tiefsten Schlaf Modus befinden, wobei er keine nennenswerte Energie verbraucht. Der zweite Microcontroller 110 verfügt ebenfalls über eine zweite Zeitreferenzeinrichtung (zweiter Oszillator).

Die maximale Taktfrequenz des ersten Microcontrollers 101 und zweiten Microcontrollers 110 kann jeweils kleiner 150 MHz sein. Vorzugsweise kann die maximale Taktfrequenz des ersten Microcontrollers 110 kleiner oder gleich 80 MHz sein.

Der erste Microcontroller 101 und zweite Microcontroller 110 können bei einer Spannung von 1,8 V einen Strom von weniger als 34 mA ziehen. Vorzugsweise kann der erste Microcontroller 101 bei einer Spannung von 1,8 V einen Strom von weniger als 10 mA, vorzugsweise von weniger als 5 mA, ziehen.

Die von dem zweiten Microcontroller 110 erzeugten, weiterverarbeiteten I/Q Daten 114 können über eine zweite Schnittstelle 120 einem Netzwerk 107 und einem Head End 400 zugeführt werden. Bei der zweiten Schnittstelle 120 kann es sich vorzugsweise um eine weitere Funkschnittstelle handeln.

Bei der in Fig. 3 gezeigten Ausgestaltung besitzt der Funkempfänger 100 als autarke Energiequelle eine Batterie 105 in Form einer sogenannten Longlife Batterie. Der zweite Microcontroller 110 ist auf einem eigenen Chip 115 angeordnet. Der zweite Microcontroller 110 kann hierbei auch eine (in der Zeichnung nicht dargestellte) Mehrzahl von Einzel-Microcontrollern umfassen oder aus diesen bestehen. Der zweite Microcontroller 110 kann somit auch aus einer Anordnung von Einzel-Microcontrollern auf einem gemeinsamen Chip oder alternativ aus eine Anordnung von Microcontrollern einzelner Chips ausgestaltet sein. Bezüglich des Vergleichs der maximalen Stromaufnahmefähigkeit SA1 sowie SA2 ist für die maximale Stromaufnahmefähigkeit SA2 auf die sich aus Summe der einzelnen Microcontroller ergebende gesamte maximale Stromaufnahmefähigkeit abzustellen. Entsprechendes gilt für den vom zweiten Microcontroller 110 gezogenen Strom.

Der Speicher 109 kann entweder Teil des ersten Microcontrollers 101 oder des zweiten Microcontrollers 110 sein. Alternativ kann der Speicher 109 auch als zusätzlicher Speicher bzw. Speicherbaustein vorgesehen sein.

Während des Betriebs des Funkempfängers 100 kann der erste Microcontroller 101 in einer ersten Häufigkeit in einem aktiven Zustand und der zweite Microcontroller 110 in einer zweiten Häufigkeit in einem aktiven Zustand sein, wobei die zweite Häufigkeit größer sein kann als die erste Häufigkeit. Beispielsweise kann der erste Microcontroller 100 zur Suche von Datenpaketen 300 bzw. Teildatenpaketen 300a pro Tag 10 Mal für 30 min eingeschaltet sein. Hierbei findet er z. B. 50 Datenpakete 300 bzw. Teildatenpaketen 300a. Zur Weiterverarbeitung dieser Daten aktiviert der erste Microcontroller 100 den zweiten Microcontroller 110 dann 50 Mal. Damit ist z. B. der zweite Microcontroller 110 häufiger aber für kürzere Zeit aktiviert als der erste Microcontroller 100. Durch die Erfindung kann der zweite Microcontroller 110 z. B. häufiger bei einer kürzeren Gesamtzeitdauer als der erste Microcontroller 100 aktiv sein, wodurch eine wirksame Energieeinsparung bei gleichzeitiger Möglichkeit einer erhöhten Rechenleistung erzielt werden.

Die Erfindung macht es auch möglich, dass der zweite Microcontroller 110 vom ersten Microcontroller 101 hinsichtlich seines Betriebs erst angestoßen wird, wenn er benötigt wird. Beispielsweise kann der zweite Microcontroller 110 vom ersten Microcontroller 101 von einem Schlaf Modus oder tiefsten Schlaf Modus in den aktiven Modus aufgeweckt werden.

Der zweite Microcontroller 110 kann hierbei beispielsweise nur dann betrieben werden, wenn eine über den ersten Microcontroller 101 hinausgehende Rechenleistung benötigt wird. Insbesondere kann der zweite Microcontroller 110 sich entweder in einem Schlaf Modus mit laufender Echtzeituhr, bei dem weitgehend alle Komponenten inaktiv sind, befinden oder in einem tiefsten Schlaf Modus, bei dem auch die laufende Echtzeituhr abgeschaltet ist. Der Schlaf Modus oder tiefste Schlaf Modus kann beim zweiten Microcontroller 110 im Vergleich zum ersten Microcontroller 101 häufiger vorkommen.

Vom ersten Microcontroller 101 können insbesondere folgende Tätigkeiten geleistet werden: Filterung, Detektion sowie Auswahl (d. h. Ausschneiden) der Datenpakete aus dem I/Q-Datenstrom 108. Ein Down-Sampling und eine Datendezimierung können optional durchgeführt werden.

Vom zweiten Microcontroller 110 können insbesondere folgende Tätigkeiten durchgeführt werden: Zeit und/oder Frequenzsynchronisation der Daten und/oder Dekodieren.

Die Erfindung ermöglicht es, bestimmte Tätigkeiten der vorgenannten Liste von Tätigkeiten, z. B. die Detektion und/oder Zeit und/oder Frequenzsynchronisation, vom ersten Microcontroller 101 bei einem reduzierten Energieverbrauch mit einer geringeren Genauigkeit durchzuführen. Dies spart Energie. Bei Bedarf können die betreffenden Tätigkeiten von dem zweiten Microcontroller 110 nachfolgend mit einer höheren Genauigkeit wiederholt werden. Dies entspricht dem Durchführen einer gesplitteten Synchronisation. Hierdurch kann bezogen auf das Gesamtenergiebudget ebenfalls Energie eingespart werden.

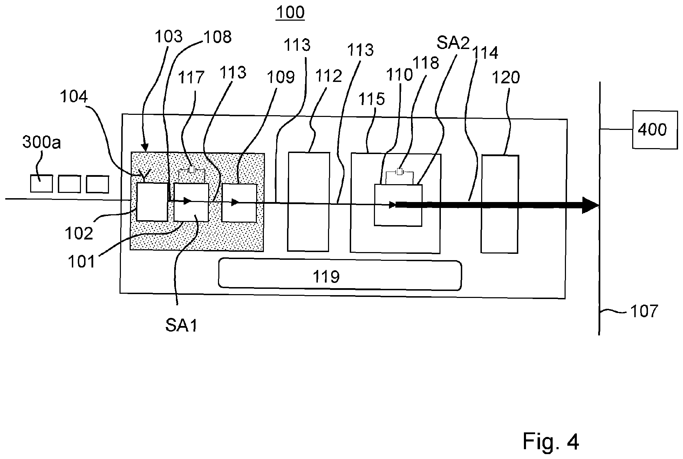

Die Ausgestaltung des Empfängers nach Fig. 4 unterscheidet sich von der Ausgestaltung des Empfängers nach Fig. 3 lediglich dadurch, dass anstelle einer Batterie eine Photovoltaikzellen-Anordnung 119 als autarke Stromquelle vorgesehen ist.

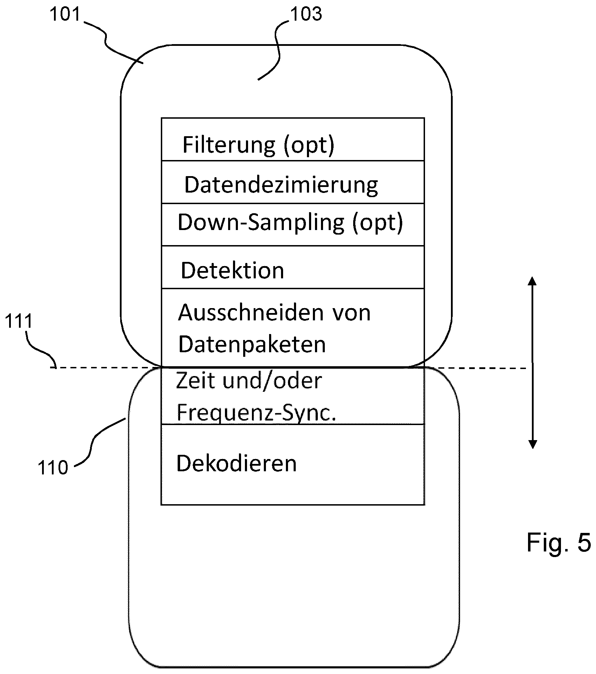

Die Zuordnung der oben genannten Tätigkeiten zu dem ersten Microcontroller 101 oder zweiten Microcontroller 110 kann variabel erfolgen. Dies ist in Fig. 5 schematisch angedeutet, indem eine Bearbeitungstrennebene 111 je nach Bedarf bzw. je nach Zustand des im Einzelfall noch bestehenden Energiebudgets der Batterie entsprechend festgelegt bzw. verschoben werden kann. Die Steuerung der Festlegung bzw. Verschiebung der Bearbeitungstrennebene 111 kann vorzugsweise durch den ersten Microcontroller 101 erfolgen.

In einer in den Figuren nicht dargestellten Ausgestaltung kann der Empfänger 100 sowohl über eine Batterie als auch über eine Photovoltaikzellen-Anordnung verfügen.

Fig. 6 zeigt eine alternative Ausgestaltung, bei der die im Funk-Empfangspfad 102 generierten I/Q Daten 108 mittels z. B. einer Umschalteinrichtung 122 aus einem Datenstrom von I/Q Daten (fortlaufende gestrichelte Linie) im Funk-Empfangspfad 102 abgezweigt und für eine Verarbeitung durch den ersten Microcontroller 101 bereitgestellt werden. Auch bei dieser Ausgestaltung befinden sich der erste Microcontroller 101 und der Funk-Empfangspfad 102 auf einem gemeinsamen Chip 103. Im Übrigen entspricht diese Ausgestaltung der Ausgestaltung nach Fig. 3.

### BEZUGSZEICHENLISTE

- 100: Funkempfänger (z. B.Gateway)
- 101: erster Microcontroller
- 102: Funk-Empfangspfad
- 103: Chip
- 104: Antenne
- 105: Batterie
- 106: Schnittstelle
- 107: Netzwerk
- 108: I/Q Daten
- 109: Speicher
- 110: zweiter Microcontroller
- 111: Bearbeitungstrennebene
- 112: Schnittstelle
- 113: vorverarbeitete Daten
- 114: weiterverarbeitete Daten
- 115: Chip
- 116: Microcontroller
- 117: erste Zeitreferenzeinheit
- 118: zweite Zeitreferenzeinrichtung
- 119: Photovoltaikzellen-Anordnung
- 120: zweite Schnittstelle
- 121: Umschaltschalteinrichtung

- 200: Funkknoten (z. B. Verbrauchsmessgerät)
- 201: Transmitter
- 202: Antenne

- 300: Telegramm (Datenpaket)
- 300a: Teildatenpaket
- 301: Pause

- 400: Headend

- SA1: maximale Stromaufnahmefähigkeit des ersten Microcontrollers
- SA2: maximale Stromaufnahmefähigkeit des zweiten Microcontrollers

## Patentansprüche

1. Funkempfänger (100) eines Datensammlers oder Gateways, des SDR-Typs für den Einsatz in einer energieautarken, vorzugsweise in einer langzeitenergieautarken Umgebung, wobei der Funkempfänger (100) Daten (102) in Form von Datenpaketen (300) oder Teildatenpaketen (300a) empfängt und zur Datenweiterverarbeitung bereitstellt und wobei der Funkempfänger (100) folgendes umfasst:
vorzugsweise eine autarke Energiequelle in Form einer Batterie (105), vorzugsweise einer Longlife Batterie, und/oder einer Photovoltaikzellen-Anordnung (119),
einen Funk-Empfangspfad (102), in dem zu den Datenpaketen (300) oder Teildatenpaketen (300a) korrespondierende analoge Funksignale empfangen, in I/Q Daten (108) umgewandelt und für eine nachfolgende Bearbeitung bereitgestellt werden,
einen dem Funk-Empfangspfad (102) nachgeschalteten ersten Microcontroller (101), der die vom Funk-Empfangspfad (102) bereitgestellten I/Q Daten (108) zu vorverarbeiteten I/Q Daten (113) verarbeitet, sowie
einen dem ersten Microcontroller (101) nachgeschalteten zweiten Microcontroller (110), der die vorverarbeiteten I/Q-Daten (113) weiterverarbeitet.

2. Funkempfänger (100) nach Anspruch 1, **dadurch gekennzeichnet, dass** die maximale Stromaufnahmefähigkeit (SA2) des zweiten Microcontrollers (110) größer ist als die maximale Stromaufnahmefähigkeit (SA1) des ersten Microcontrollers (101).

3. Funkempfänger (100) nach Anspruch 1 oder 2, **dadurch gekennzeichnet, dass** die vom Funk-Empfangspfad (102) bereitgestellten I/Q Daten (108), bevor sie dem ersten Microcontroller (101) zugeführt werden, aus einem I/Q Datenstrom abgezweigt werden.

4. Funkempfänger (100) nach einem der vorhergehenden Ansprüche, **dadurch gekennzeichnet, dass** die vom ersten Microcontroller (101) vorverarbeiteten I/Q Daten (113) in einem Speicher (109) zwischengespeichert werden.

5. Funkempfänger (100) nach einem der vorhergehenden Ansprüche, **dadurch gekennzeichnet, dass** der Funk-Empfangspfad (102), der erste Microcontroller (101) sowie vorzugsweise der Speicher (109) auf einem gemeinsamen Chip (103), vorzugsweise auf einem System on a Chip (SoC) Chip, integriert sind.

6. Funkempfänger (100) nach einem der vorhergehenden Ansprüche, **dadurch gekennzeichnet, dass** der zweite Microcontroller (110) auf einem eigenen Chip (115) integriert ist.

7. Funkempfänger (100) nach einem der vorhergehenden Ansprüche, **dadurch gekennzeichnet, dass** der erste (101) und zweite Microcontroller (110) über eine Schnittstelle (112), vorzugsweise über ein serielles Interface, besonders vorzugsweise über ein Serial Peripheral Interface (SPI), miteinander verbunden sind.

8. Funkempfänger (100) nach einem der vorhergehenden Ansprüche, **dadurch gekennzeichnet, dass** der zweite Microcontroller (110) eine Mehrzahl von Einzel-Microcontroller umfasst.

9. Funkempfänger (100) nach einem der vorhergehenden Ansprüche, **dadurch gekennzeichnet, dass** während des Betriebs des Funkempfängers (100)
der erste Microcontroller (101) in einer ersten Häufigkeit (H1) in einem aktiven Zustand ist,
der zweite Microcontroller (110) in einer zweiten Häufigkeit (H2) in einem aktiven Zustand ist, und
die zweite Häufigkeit (H2) größer ist als die erste Häufigkeit (H1).

10. Funkempfänger (100) nach einem der vorhergehenden Ansprüche, **dadurch gekennzeichnet, dass** der zweite Microcontroller (110) nur dann betrieben wird, wenn eine über den ersten Microcontroller (101) hinausgehende Rechenleistung benötigt wird.

11. Funkempfänger (100) nach einem der vorhergehenden Ansprüche, **dadurch gekennzeichnet, dass** der zweite Microcontroller (110) vom ersten Microcontroller (101) von einem Passivmodus in einen Arbeitsmodus aufgeweckt wird.

12. Funkempfänger (100) nach einem der vorhergehenden Ansprüche, **dadurch gekennzeichnet, dass** der Energieverbrauch des ersten Microcontrollers (101) geringer ist als der des zweiten Microcontrollers (110).

13. Funkempfänger (100) nach einem der vorhergehenden Ansprüche, **dadurch gekennzeichnet, dass** ein Schlaf Modus beim zweiten Microcontrollers (110) im Vergleich zum ersten Microcontroller (101) häufiger vorkommt.

14. Funkempfänger (100) nach einem der vorhergehenden Ansprüche, **dadurch gekennzeichnet, dass**
folgende Tätigkeiten vom ersten Microcontroller (101) geleistet werden:
Filterung und/oder
Datendezimierung und/oder
Down-Sampling und/oder
Detektion und/oder
Auswahl der Datenpakete aus dem I/Q-Datenstrom der vorverarbeiteten I/Q Daten (113) und/oder
Zeit und/oder Frequenzsynchronisation und/oder
Dekodieren
und/oder
folgende Tätigkeiten vom zweiten Microcontroller (110) geleistet werden:
Filterung und/oder
Datendezimierung und/oder
Down-Sampling und/oder
Detektion und/oder
Auswahl der Datenpakete aus dem I/Q-Datenstrom der vorverarbeiteten I/Q Daten (113) und/oder
Zeit und/oder Frequenzsynchronisation und/oder Dekodieren.

15. Funkempfänger (100) nach Anspruch 14, **dadurch gekennzeichnet, dass** eine, vorzugsweise in ihrer Lage variierbare, Bearbeitungstrennebene (111) der Zuordnung der Tätigkeit des ersten Microcontrollers (101) und der Tätigkeit des zweiten Microcontrollers (110) festgelegt wird.

16. Funkempfänger (100) nach Anspruch 15, **dadurch gekennzeichnet, dass** die Lage der Bearbeitungstrennebene (111) zwischen der Tätigkeit des ersten Microcontrollers (101) und der Tätigkeit des zweiten Microcontrollers (110) vom ersten Microcontroller (101) gesteuert wird.

17. Funkempfänger (100) nach den Ansprüchen 14 bis 16, **dadurch gekennzeichnet, dass** die Zeit- und/oder Frequenzsynchronisation der von dem ersten Microcontroller (101) vorverarbeiteten I/Q Daten (113) in dem zweiten Microcontroller (110) nachjustiert wird bzw. werden.

18. Funkempfänger (100) nach einem der vorhergehenden Ansprüche, **dadurch gekennzeichnet, dass** die maximale Taktfrequenz des ersten Microcontrollers (101) und/oder zweiten Microcontrollers (110) kleiner 150 MHz ist, vorzugsweise dass die maximale Taktfrequenz des ersten Microcontrollers (101) kleiner oder gleich 80 MHz und/oder die maximale Taktfrequenz des zweiten Microcontrollers (110) kleiner 150 MHz ist.

19. Funkempfänger (100) nach einem der vorhergehenden Ansprüche, **dadurch gekennzeichnet, dass** der erste Microcontroller (101) und/oder zweite Microcontroller (110) bei einer Spannung von 1,8 V einen Strom von weniger als 34 mA zieht, vorzugsweise dass der erste Microcontroller (101) bei einer Spannung von 1,8 V einen Strom von weniger als 10 mA, vorzugsweise von weniger als 5 mA, zieht und/oder der zweite Microcontroller (110) bei einer Spannung von 1,8 V einen Strom von weniger als 34 mA zieht.
